# EUROPEAN PATENT APPLICATION

(11) **EP 2 275 275 A1**
(43) Date of publication of application: **19.01.2011**
(21) Application number: 10166999.2
(22) Date of filing: 23.06.2010
(51) Int. Cl.: B41N 1/08, C22B 21/00, C22B 21/06, B22D 11/00

(54) **Method for manufacturing support for planographic printing plate and method for recycling planographic printing plate**

(30) Priority: 26.06.2009 JP 2009153018
(71) Applicant: Fujifilm Corporation, Minato-ku Tokyo 106-8620 (JP)
(72) Inventor: Osada, Masakazu, Shizuoka 421-0396 (JP); Yamazaki, Toru, Shizuoka 421-0396 (JP); Okishi, Yoshio, Shizuoka 421-0396 (JP)
(74) Representative: HOFFMANN EITLE

(57) **Abstract**

According to the methods of the present invention, energy loss and yield loss can be significantly reduced and the quality of the aluminum purity and the trace metal contents can be ensured even when used planographic printing plates are reused. A recycling material (40) with deposited substances removed therefrom is melted in a melting furnace (42) into a recycled molten metal (44). The analyzed result obtained by analyzing the recycled molten metal is used to determine the mix proportions of the recycled molten metal, a fresh metal ingot (12), and a trace metal master alloy to be inputted into a pre-rolling melting furnace. The produced recycled molten metal (44) in the molten state is inputted into the pre-rolling melting furnace to be mixed with the fresh metal ingot and the trace metal master alloy.

## Description

### BACKGROUND OF THE INVENTION

### Field of the Invention

The present invention relates to a method for manufacturing a support for a planographic printing plate and a method for recycling a planographic printing plate, and particularly to a technology for reducing the amount of produced CO₂, which contributes to global warming, by reducing energy loss and yield loss arising when a used planographic printing plate is recycled and reused.

### Description of the Related Art

A planographic printing plate is manufactured by forming a plate making layer (photosensitive layer, for example) on a roughened, aluminum support for a planographic printing plate. Exemplary roughening methods include mechanical roughening, electrochemical roughening, chemical roughening (chemical etching), and combinations thereof. To roughen a surface of a support for a planographic printing plate uniformly and densely, an aluminum raw material thereof needs to be a highly pure fresh metal ingot with trace metals, such as Si, Fe, Cu, and Mn, the contents of which precisely adjusted.

It therefore has been difficult to use used planographic printing plates (aluminum scrap) as a raw material for recycling a support for a planographic printing plate, and such used planographic printing plates are in reality recycled into recycling materials for applications in which high contents of the trace metals described above are accepted, such as materials for recycled window sashes, automobile engines, and automobile wheels around which tires are attached.

However, the fact that a large amount of energy, as large as 140.9 MJ, is required to manufacture 1 kg of fresh metal ingot leads to production of a significantly large amount of CO₂, 9.22 kg per 1 kg of metal ingot, which contributes to global warming. On the other hand, when used planographic printing plates having been used in printing, and cut pieces and other leftovers from a planographic printing plate left in the course of manufacturing the planographic printing plate are used as a raw material for a recycled metal ingot, the energy used to manufacture 1 kg of recycled metal ingot is approximately 4% of the energy required when a fresh metal ingot is used (100%), and the amount of produced CO₂ is also significantly small, approximately 4% of the amount of CO₂ produced when a fresh metal ingot is used.

To reduce the energy used to manufacture a planographic printing plate, it is therefore important to recycle used planographic printing plates and cut pieces and other leftovers into a recycling material. To this end, it is important to establish a recycling method for not only reducing the amount of energy but also ensuring the quality of a support for a planographic printing plate.

Methods for recycling used planographic printing plates and leftovers described above into a recycling material have been studied in recent years and, for example, described in Japanese Patent No. 3,420,817.

Japanese Patent No. 3,420,817 discloses a method for manufacturing a support for a planographic printing plate by reusing used planographic printing plates. The method includes the steps of removing a photosensitive layer, a material for protecting the photosensitive layer, a packing material or an adhesive tape, and other impurities from the used planographic printing plates, directly inputting a raw material to be melted that is formed of the used planographic printing plates (the proportion of which is 1% or higher), a fresh metal ingot, and a master alloy into a pre-rolling melting furnace to prepare a molten metal, and performing a molten metal treatment and a filtering treatment on the prepared molten metal to remove impurities.

### SUMMARY OF THE INVENTION

The method for manufacturing a support for a planographic printing plate disclosed in Japanese Patent No. 3,420,817, however, is a method in which used planographic printing plates are directly inputted into a pre-rolling melting furnace (hereinafter referred to as a direct input method). It is therefore inevitable that the composition of the used aluminum to be inputted greatly affects the alloy composition of a rolled aluminum plate. When a planographic printing plate is roughened by electrolysis, the alloy composition of the aluminum plate decisively affects the quality of the roughness.

Therefore, to produce an aluminum plate having an aluminum purity of 99.0% or higher, which is necessary in electrolysis, the method described in Japanese Patent No. 3,420,817 is not appropriate because the method does not allow the largest possible amount of used planographic printing plate made of a variety of aluminum materials and inputted into a pre-rolling melting furnace to be determined in advance, and a smaller amount is inputted to assure the quality of the resultant product. On the other hand, to increase the amount of used planographic printing plate to be inputted, it is necessary to repeat measuring the impurity composition of the used planographic printing plates before inputting them into the pre-rolling melting furnace, resulting in an increased period required for melting and component adjusting processes and hence a reduced yield due to produced oxidized materials (aluminum oxides). As a result, reduction in energy loss and yield loss, which is quite important in recycling technologies, is not achieved.

Although converting used planographic printing plates temporarily into a recycled metal ingot improves storage conditions and transportation and other handling conditions of the recycling material before they are inputted into the pre-rolling melting furnace, the conversion process requires energy for melting the recycled metal ingot and causes the recycled metal ingot to be oxidized when melted, resulting in energy loss and yield loss.

The present invention has been made in view of the circumstances described above. An object of the present invention is to provide a method for manufacturing a support for a planographic printing plate and a method for recycling a planographic printing plate that allow significant reduction in the amount of produced CO₂ which contributes to global warming, by not only significantly reducing energy loss and yield loss but also ensuring the quality of the aluminum purity and the trace metal contents even when used planographic printing plates are reused to manufacture a support for a planographic printing plate.

To achieve the object described above, a first aspect of the present invention provides a method for manufacturing a support for a planographic printing plate, the method characterized by including a preparation step of preparing used planographic printing plates as a recycling material, a melting step of melting the material in a melting furnace into a recycled molten metal, an analysis step of analyzing aluminum purity and trace metal contents of the recycled molten metal, a transportation step of removing the recycled molten metal from the melting furnace and transporting the recycled molten metal in the molten state to a pre-rolling melting furnace, a mix proportion determination step of comparing the analyzed values obtained in the analysis step with a desired aluminum purity and desired trace metal contents of a predetermined planographic printing plate to calculate the difference between the compared values, and determining mix proportions, based on the calculated difference, of a fresh metal ingot having a fixed aluminum purity and fixed trace metal contents and a trace metal master alloy having fixed trace metal contents, a component adjustment step of inputting the recycled molten metal in the molten state into the pre-rolling melting furnace, inputting the fresh metal ingot and the trace metal master alloy into the pre-rolling melting furnace in accordance with the mix proportions determined in the determination step, and heating and melting the recycled molten metal, the fresh metal ingot, and the trace metal master alloy into molten aluminum having desired components, and an aluminum support formation step of performing a rolling process to form a strip-shaped aluminum plate from the resultant molten aluminum.

The recycling material preferably includes unused planographic printing plates and cut pieces and other leftovers from a planographic printing plate left in the course of a planographic printing plate manufacturing process as well as the used planographic printing plates having been used in printing. The predetermined planographic printing plate used herein means that its required aluminum purity and trace metal contents are predetermined in accordance with the type of planographic printing plate to be manufactured. "The fresh metal ingot having a fixed aluminum purity and fixed trace metal contents" and "the trace metal master alloy having fixed trace metal contents" used herein refer to "a fresh metal ingot which has a known aluminum purity and known trace metal contents" and "a trace metal master alloy which has known trace metal contents".

According to the present invention, instead of directly inputting used planographic printing plates, which are the recycling material, into the pre-rolling melting furnace as in related art, the recycling material is melted in the melting furnace into a recycled molten metal without being converted temporarily into a recycled metal ingot, and the analyzed result obtained by analyzing the recycled molten metal is used to determine the mix proportions of the recycled molten metal, the fresh metal ingot, and the trace metal master alloy to be inputted into the pre-rolling melting furnace. The molten metal in the melting furnace for regeneration or the molten metal being transported may be sampled for the analysis.

The present invention allows the largest possible mix proportion of the recycled molten metal to be precisely determined, whereby a much less amount of fresh metal ingot, the production of which consumes a large amount of energy, can be used. Further, in the present invention, in which the recycled molten metal in the molten state is transported to the pre-rolling melting furnace, no energy is required to melt a recycled metal ingot and no aluminum oxide is produced, unlike related art, whereby the energy loss and the yield loss can be greatly reduced. Moreover, an aluminum plate whose quality of the aluminum purity is ensured can be manufactured. Specifically, the manufactured aluminum plate has an aluminum purity of 99.0% of higher, which is necessary in electrolytic roughening.

Therefore, even when used planographic printing plates are reused to manufacture a support for a planographic printing plate, not only can the energy loss and the yield loss be significantly reduced but also the quality of the aluminum purity and the trace metal contents can be ensured. The amount of produced CO₂ which contributes to global warming, can thus be greatly reduced.

In the method for manufacturing a support for a planographic printing plate according to the present invention, a thermally insulating container filled with the recycled molten metal is preferably transported in the transportation step.

In this way, even when the melting step and the component adjustment step are carried out in separate places (separate factories, for example), the recycled molten metal in the molten state can be inputted into the pre-rolling melting furnace in the component adjustment step. Further, when used planographic printing plates are inputted into a melting furnace, smoke may be produced or a steam-induced explosion due to water or other components deposited on the recycling material could occur. In consideration of these risks, carrying out the step of melting the recycling material in another place prevents any possible trouble in the pre-rolling melting furnace and allows the operation thereof to be maintained.

In the method for manufacturing a support for a planographic printing plate according to the present invention, the melting furnace used in the melting step is preferably a dedicated furnace that is only used to melt the recycling material.

When the recycling material is melted in a dedicated melting furnace as described above, a contamination substance attached to the melting furnace is the same component as that contained in the recycling material, whereby variation in purity of the components (aluminum purity and trace metal contents) of the produced recycled molten metal can be minimized. The quality of the recycled molten metal can thus be stably maintained. The use of a dedicated melting furnace is particularly effective in a case where a large amount of recycling material can be recovered.

The method for manufacturing a support for a planographic printing plate according to the present invention preferably further includes a removal step of removing a plate making layer and an ink from the used planographic printing plates before the preparation step.

The removal step not only prevents impurities from contaminating the recycled molten metal melted in the melting furnace but also allows an impurity removal step using a molten metal treatment (blowing a gas into the recycled molten metal) and a filtering treatment to be omitted, whereby any energy loss and yield loss in the melting step can be reduced. In the removal step, the plate making layer, the ink, and other deposited substances are preferably removed in such a way that their proportion is 1% or lower by mass against their entire mass before removal (100%). Further, when a protective sheet and a packing sheet are attached to the recycling material, it is more desirable to remove the protective sheet or the packing sheet.

In the method for manufacturing a support for a planographic printing plate according to the present invention, the recycling material is preferably melted in the recycling material melting step at a temperature ranging from 680 to 900°C. The reason for this is that setting the temperature at 680°C or higher allows the melting period to be shorter than that when the temperature is lower than 680°C, and carrying out the melting step at a temperature of 900°C or higher causes the furnace used in the recycling material melting step to be degraded faster. In particular, in a case where the molten metal is transported, it is preferable to save the energy required before the molten metal is inputted into the pre-rolling melting furnace by melting the recycling material at a highest possible temperature but lower than 900°C in order to reduce not only the energy for compensating decrease in temperature during the transportation and maintaining the temperature but also the energy loss associated with the period required to melt the recycling material in the recycling material melting step.

In the method for manufacturing a support for a planographic printing plate according to the present invention, it is preferable that the melting furnace used in the recycling material melting step is a general-purpose melting furnace, and that before the recycling material is melted, pure aluminum having an aluminum content of 99.5% or higher is melted in the melting furnace so that the interior thereof is cleaned.

In the method for manufacturing a support for a planographic printing plate according to the present invention, the aluminum purity of the molten aluminum before the rolling process is preferably 99.0% or higher, more preferably 99.5% or higher. The reason for this is that an aluminum plate having an aluminum purity of 99.0% or higher is preferably used in electrolytic roughening. Another reason for this is that breaking and other problems tend to occur during the rolling process, in which the aluminum plate is rolled, when the aluminum purity is lower than 99.0%.

In the method for manufacturing a support for a planographic printing plate according to the present invention, the trace metals contained in the recycled molten metal are preferably analyzed for at least Si, Fe, Cu, and Mn. The reason for this is that the trace metals described above greatly affect the quality of hydrochloric acid-based electrolytic roughening.

In the rolling process in the support formation step in the present invention, the molten aluminum is rolled into a strip-shaped member having a predetermined thickness, followed by annealing as required. Thereafter, one or both sides of the resultant strip-shaped member are roughened. Examples of the roughening method include mechanical roughening in which a surface is mechanically roughened and electrochemical roughening in which a surface is electrolytically roughened by applying an AC current in an acidic electrolyte. The support for a planographic printing plate is then anodized, followed by a hydrophilic treatment using a sodium silicate solution as required. Thereafter, a plate making layer forming liquid is applied onto the roughened surface, which is then dried to form a photosensitive, thermosensitve, or photopolymerizable plate making layer. A planographic printing plate web is thus produced. The resultant planographic printing plate web is cut into planographic printing plates having predetermined dimensions.

Further, to achieve the object described above, there is provided a method for recycling a planographic printing plate, the method characterized by including a planographic printing plate manufacturing step of manufacturing a planographic printing plate by forming at least a plate making layer on the support for a planographic printing plate manufactured by using the method according to any one of the first to seventh aspects, a printing step of performing desired printing by using the manufactured planographic printing plate, a recovery step of recovering the used planographic printing plate left in the printing step, and a recycle step of recycling the recovered, used planographic printing plate into a recycling material to be used in the melting step of the method according to any one of the first to seventh aspects.

In the method for recycling a planographic printing plate according to the present invention, since the manufacturing process can be carried out in a closed recycle flow in which 100% fresh metal ingot is used to manufacture planographic printing plates only for the first time and the largest possible proportion of used planographic printing plates roughened by hydrochloric acid-based electrolysis is used as a recycled molten metal from the second time, the amount of CO₂ produced when planographic printing plates are manufactured can be greatly reduced.

In the method for recycling a planographic printing plate according to the present invention, the recycling material preferably includes cut pieces and other leftovers from a planographic printing plate left in the course of the manufacture in the planographic printing plate manufacturing step as well as the planographic printing plates having been used in printing.

As a result, a completely closed recycle flow for reusing aluminum scraps produced in the planographic printing plate-related industry can be established, whereby the amount of produced CO₂ can be further reduced.

The method for manufacturing a support for a planographic printing plate and the method for recycling a planographic printing plate according to the present invention not only allow energy loss and yield loss to be significantly reduced but also ensure the quality of the aluminum purity and the trace metal contents even when used planographic printing plates are reused to manufacture a support for a planographic printing plate.
As a result, the amount of produced CO₂ which contributes to global warming, can be greatly reduced.

### BRIEF DESCRIPTION OF THE DRAWINGS

Fig. 1 is a descriptive diagram describing the flow of a closed-loop recycle provided by a method for recycling a planographic printing plate;
Fig. 2 is a descriptive diagram showing steps of manufacturing a planagraphic printing plate from an aluminum plate;
Fig. 3 is a cross-sectional view showing an exemplary recycled molten metal manufacturing apparatus and shows the procedure from manufacturing a recycled molten metal from used planographic printing plates to filling a thermally insulated container with the recycled molten metal;
Fig. 4 is a flow diagram showing outline of a method for manufacturing a support for a planographic printing plate according to the present invention; and
Fig. 5 is a flow diagram showing outline of a method for recycling a planographic printing plate according to the present invention.

### DETAILED DESCRIPTION OF THE PREFERRED EMBODIMENTS

Preferred embodiments of a method for manufacturing a support for a planographic printing plate and a method for recycling a planographic printing plate according to the present invention will be described below in detail.

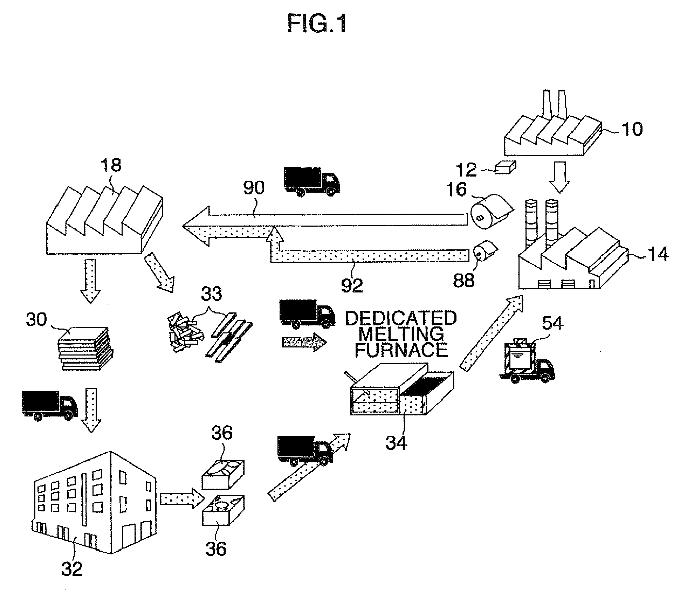

Fig. 1 is a descriptive diagram describing the flow of a closed-loop recycle provided by a method for recycling a planographic printing plate according to the present invention. The following description will be made with reference to a planographic printing plate with a photosensitive plate making layer. A support for the planographic printing plate according to the present invention is a component of the closed-loop recycle.

As shown in Fig. 1, an aluminum refinery 10 manufactures an aluminum fresh metal ingot 12 from bauxite. The aluminum purity of the aluminum fresh metal ingot 12 is preferably 99.7% or higher.

The aluminum fresh metal ingot 12 is then melted in a pre-rolling melting furnace in an aluminum rolling mill 14 into a molten metal, followed by hot rolling and cold rolling. The pre-rolling melting furnace can be a known one in the art. An aluminum plate 16 made of the 100% fresh metal ingot is thus manufactured in a rolled form in which the aluminum plate 16 is wound into a coil. The hot rolling start temperature preferably ranges from 350 to 500°C. An intermediate annealing may be carried out before or after the hot rolling or in the course thereof, but intermediate annealing is preferably omitted from the viewpoint of suppressing CO₂ production. The thickness of the aluminum plate produced by the rolling processes preferably ranges from 0.1 to 0.5 mm. After the rolling processes, the flatness of the aluminum plate may be improved by using a roller leveler, a tension leveler, or any other suitable leveler.

Thereafter, the aluminum plate 16 having undergone the rolling and other processes and having been wound into an aluminum coil is delivered to a planographic printing plate manufacturing factory 18.

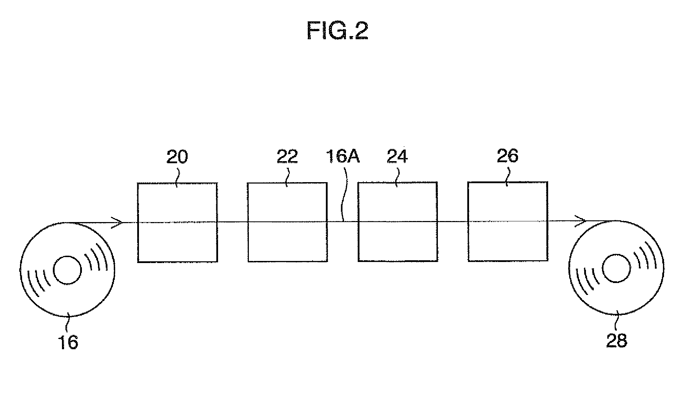

In the planographic printing plate manufacturing factory 18, the aluminum plate 16 undergoes the steps shown in Fig. 2, and a strip-shaped raw plate from which planographic printing plates are formed is manufactured. That is, first, in a roughening step 20, the aluminum plate 16 is roughened so that the aluminum plate 16 is grained.
In this case, it is further preferable that an anodizing step 22 is carried out after the roughening step 20 to form an anodized film on the aluminum plate 16. A support for a planographic printing plate 16A is thus manufactured.

Electrolytic roughening is carried out by conducting an AC current as an electrolytic current to carry out etching in an aqueous hydrochloric acid solution or any other suitable aqueous solution. The acid concentration of the aqueous solution preferably ranges from 3 to 150 g/l, more preferably from 5 to 50 g/l. The aqueous hydrochloric acid solution is particularly preferably obtained by adding aluminum chloride or any other suitable aluminum salt to diluted hydrochloric acid containing 2 to 15 g/l of hydrochloric acid so that the aluminum ion concentration is adjusted to a value ranging from 2 to 7 g/l. The amount of electricity applied in the electrolytic roughening preferably ranges from 20 to 500 C/dm². Among AC currents having various waveforms that can be used as the AC current described above, such as a sinusoidal current, a rectangular current, a trapezoidal current, and a triangular current, a rectangular current and a trapezoidal current are more preferable, and a trapezoidal current is particularly preferable. In the hydrochloric acid-based electrolytic roughening, the aluminum purity and the trace metal contents of the aluminum plate 16 affect the uniformity of pits produced when the aluminum plate is roughened by the electrochemical roughening and hence affect resistance to printing and dirt and stability in light exposure. The aluminum purity and the trace metal contents are therefore preferably within the following ranges. It is noted that the aluminum purity and the trace metal contents shown in the following sections are applied to both of the aluminum plate 16 made of the 100% fresh metal ingot and an aluminum plate 88 containing a recycling material, which will be described later.

That is, the aluminum purity of the aluminum plate is preferably 99.0% or higher, more preferably 99.5% or higher. When the purity of the aluminum plate is lower than 99.0% and contains a lot of impurities, which are not preferable in the roughening, breaking and other problems tend to occur during the rolling processes.

Among the trace metals contained in the aluminum plate 16, the Si content is preferably 0.50% by mass or lower, more preferably ranges from 0.05 to 0.50% by mass, further more preferably from 0.05 to 0.25% by mass, particularly preferably from 0.06 to 0.15% by mass.

The Cu content is preferably 0.30% by mass or lower, more preferably ranges from 0.010 to 0.30% by mass, further more preferably from 0.02 to 0.15% by mass, particularly preferably from 0.040 to 0.09% by mass.

The Fe content is preferably 0.7% by mass or lower, more preferably ranges from 0.15 to 0.7% by mass, further more preferably from 0.15 to 0.4% by mass, particularly preferably from 0.20 to 0.40% by mass.

The Mn content is preferably 0.5% by mass or lower, more preferably ranges from 0.002 to 0.15% by mass, further more preferably from 0.003 to 0.02% by mass, particularly preferably from 0.004 to 0.01% by mass.

As other trace metals, the Mg content is preferably 1.5% by mass or lower, more preferably ranges from 0.001 to 1.5% by mass, further more preferably from 0.001 to 0.60% by mass, particularly preferably from 0.001 to 0.40% by mass.

The Zn content is preferably 0.25% by mass or lower, more preferably ranges from 0.001 to 0.25% by mass, further more preferably from 0.001 to 0.10% by mass, particularly preferably from 0.010 to 0.03% by mass.

The Ti content is preferably 0.10% by mass or lower, more preferably ranges from 0.001 to 0.10% by mass, further more preferably from 0.001 to 0.05% by mass, particularly preferably from 0.003 to 0.03% by mass.

The Cr content is preferably 0.10% by mass or lower, more preferably ranges from 0.001 to 0.10% by mass, further more preferably from 0.001 to 0.02% by mass, particularly preferably from 0.002 to 0.02% by mass.

Smuts and intermetallic compounds are present on the aluminum plate 16 having been roughened by the electrolysis described above. It is therefore preferable to perform an alkali treatment using an alkali solution having a pH of 10 or higher and a temperature ranging from 25 to 80°C and then perform a cleaning treatment using an acidic solution primarily made of sulfuric acid and having a temperature ranging from 20 to 80°C.

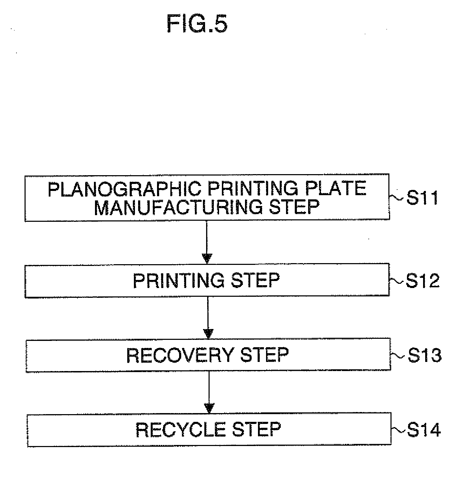

Thereafter, a photosensitive layer application liquid is applied onto the roughened surface of the support for a planographic printing plate 16A in a plate making layer forming step 24, and the photosensitive layer is dried in a drying step 26. A strip-shaped raw plate 28, from which planographic printing plates are formed, is thus manufactured. In the following processing step, a striped-shaped interleaf is overlaid on the strip-shaped raw plate 28, and the assembly is cut into rectangular sheets having predetermined dimensions. Planographic printing plates 30 with the interleaves (see Fig. 1) are thus manufactured (S11 in Fig.5). A plurality of the thus manufactured sheet-shaped planographic printing plates 30 with the interleaves are stacked, packed, and delivered to a printing company 32. Since the interleaf is inserted between the planographic printing plates 30 when they are stacked, the surface of the photosensitive layer of each of the planographic printing plates 30 will not be scratched.

In the step of processing the strip-shaped raw plate 28, leftovers 33, such as cut pieces, are produced from the strip-shaped raw plate 28. The produced leftovers 33 are recovered as a recycling material in the planographic printing plate manufacturing factory 18 and delivered to a downstream recycling factory 34 where the leftovers 33 undergo a recycling process, as shown in Fig. 1.

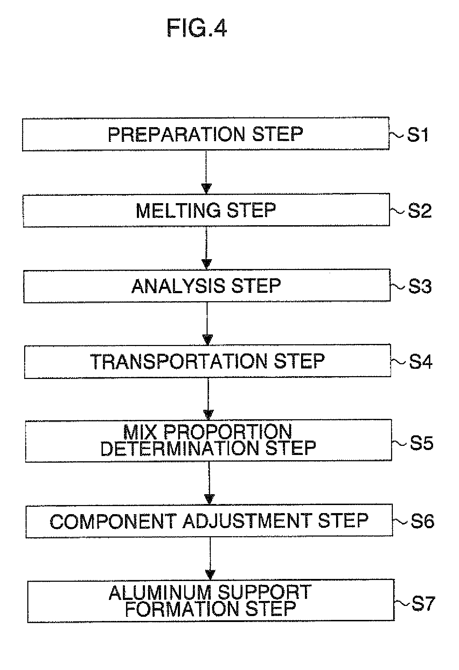

On the other hand, the planographic printing plates 30 having been delivered to the printing company 32 undergo image exposure and development, are then attached to a printing apparatus, and are used in printing (S12 in Fig.5). Used planographic printing plates 36 having been used in printing are recovered (S13 in Fig.5) as a recycling (S1 in Fig.4) material in the printing company 32 and delivered to the downstream recycling factory 34 where the used planographic printing plates 36 undergo a recycling process (S14 in Fig.5).

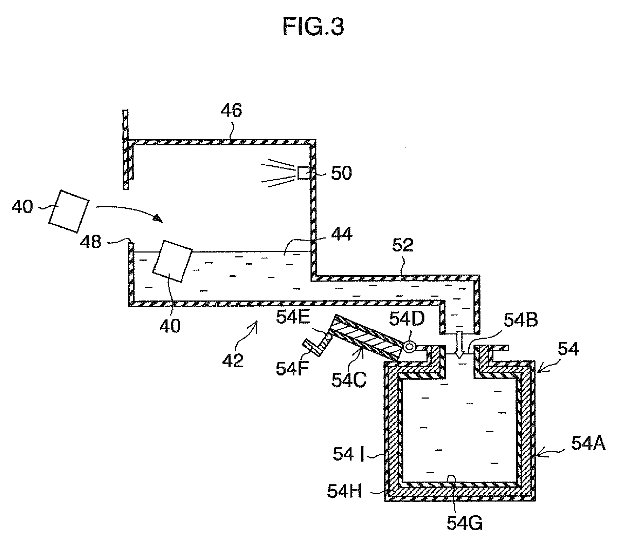

Fig. 3 shows an exemplary recycled molten metal manufacturing apparatus 38 for manufacturing a recycled molten metal. In the recycled molten metal manufacturing apparatus 38, the leftovers 33, one side of which ranges from approximately 1 to 60 cm, left in the planographic printing plate manufacturing factory 18 and the used or unused planographic printing plates 36 left in the printing company 32, which are both recycling materials, undergo a recycling process. In the following description, the leftovers 33 and the planographic printing plates 36 are collectively referred to as a recycling material 40.

As shown in Fig. 3. the recycling material 40 is melted in a melting furnace 42 at a temperature ranging from 680 to 900°C into a recycled molten metal 44 (S2 in Fig.4). Since the recycled molten metal 44 is thus produced from the recycling material 40 by melting the recycling material 40 in the melting furnace 42 at a melting temperature ranging from 680 to 900°C, the melting speed in the melting furnace 42 is fast, and hence the tact time required to produce the recycled molten metal 44 can be shortened. As a result, since the period during which the recycled molten metal 44 comes into contact with air in the process of preparing the molten metal 44 is shortened, the amount of oxidized substances (aluminum oxides) produced in the preparation process is reduced and hence the yield of the recycled molten metal 44 increases. Therefore, the amount of CO₂ produced when 1 kg of recycled molten metal is manufactured can be reduced. That is, setting the temperature at 680°C or higher allows the melting period to be shorter than that when the temperature is lower than 680°C, and setting the temperature at 900°C or lower allows the yield to be higher than that when the temperature is higher than 900°C.

The melting furnace 42 has an upper blocking ceiling wall 46 and an opening 48 formed through one side wall, and the recycling material 40 is inputted through the opening 48. A burner 50 is provided on the other side wall facing the input opening 48 and heats and melts the recycling material 40 having been inputted.

The melting furnace 42 is preferably a dedicated melting furnace exclusively used to melt the recycling material 40. When the recycling material 40 is melted in a dedicated melting furnace, a contamination substance attached to the wall of the melting furnace 42 is the same component as that contained in the recycling material 40, whereby variation in purity of the components (aluminum purity and trace metal contents) of the produced recycled molten metal 44 can be minimized.

The recycled molten metal 44 having been melted in the melting furnace 42 then flows through a conduit 52 and is poured into a thermally insulated container 54. The thermally insulated container 54 is formed of a container body 54A and a lid member 54C that closes a molten metal receiving opening 54B of the container body 54A, and the lid member 54C is supported by the container body 54A via a hinge 54D so that the lid member 54C can be opened and closed. The molten metal receiving opening 54B is used as a molten metal pouring opening when the molten metal is inputted into the pre-rolling melting furnace in the aluminum rolling mill 14, which will be described later.

The lid member 54C has a locking arm 54F that is pivotal around a pin 54E and prevents the lid member 54C from opening. Each of the container body 54A and the lid member 54C has a three-layer structure formed of an inner layer 54G made of a refractory material, an intermediate layer 54H made of a thermally insulating material, and an outer layer 541 made of iron or any other suitable metal. The refractory material used to form the inner layer 54G, which comes into contact with the hot recycled molten metal 44 immediately after the melting process in the melting furnace 42, is preferably a high-alumina refractory material because the inner layer 54G is used in a higher-temperature environment than that in the pre-rolling melting furnace. When heat-resistant brick is used as the refractory material, it is most desirable to use heat-resistance brick containing no Si in the form of an inner liner in consideration of preventing impurities from being released from the heat-resistance brick. The thermally insulated container 54 used in the present invention is preferably dedicated to the recycled molten metal 44 because it is necessary to maintain the aluminum purity of the molten metal 44 at a high level and minimize contamination of the molten metal 44 with impurities. Further, before the thermally insulated container 54 is used for the first time or if a contamination substance is detected in the recycled molten metal 44 sampled from the thermally insulated container 54, it is preferable to clean the interior of the thermally insulated container 54 by using pure molten aluminum having an aluminum content of 99.5% or higher. The pure molten aluminum having been used for the cleaning can be used in the pre-rolling melting furnace in place of a fresh metal ingot as long as the result of analysis of the components of the pure molten aluminum, such as the aluminum purity and the trace metal contents, shows that the pure molten aluminum can be used as a fresh metal ingot without any problem.

Before melting the recycling material 40 in the melting furnace 42, it is desirable to remove the plate making layer, inks, and other deposited substances from the recycling material 40 in advance. The removal of the plate making layer, inks, and other deposited substances is preferably carried out in such a way that proportion of remaining substances after removal is 1% or lower by mass against their entire mass before removal (100%). Further, when a protective sheet and a packing sheet are attached to the recycling material 40, it is more desirable to remove the protective sheet and the packing sheet.

The deposited substances can alternatively be removed by melting the recycling material 40 with the plate making layer, the inks, the protective sheet, and the packing sheet attached thereto in the melting furnace 42 and performing a molten metal treatment (blowing a gas into the molten metal) and a filtering treatment (filtering the molten metal through a filtering material) on the recycled molten metal 44 (see Japanese Patent No. 3,420,817). However, since the molten metal treatment and the filtering treatment are added as extra steps, the tact time elapsing from the time when the recycling material 40 starts to melt in the melting furnace 42 to the time when the thermally insulated container 54 is filled with the recycled molten metal 44 increases accordingly, resulting in not only energy loss but also yield loss because of an increased amount of oxidized substances produced in an increased time during which the recycling material 40 is exposed to air.

Thereafter, the thermally insulated container 54 filled with the recycled molten metal 44 manufactured in the recycling factory 34 is loaded on a truck or any other suitable transportation and delivered (S4 in Fig.4) to the aluminum rolling mill 14. In a case where the recycling factory 34 is integrated with the aluminum rolling mill 14, the recycled molten metal 44 produced in the recycling factory 34 is not necessarily poured into the thermally insulated container 54 but can be directly delivered to the pre-rolling melting furnace in the aluminum rolling mill through a thermally insulated conduit (not shown).

In the aluminum rolling mill 14, the recycled molten metal 44 manufactured in the recycling factory 34 is analyzed (S3 in Fig.4) in terms of the aluminum purity and the contents of trace metals (Si, Fe, Cu, and Mn, for example). The recycled molten metal 44 may alternatively be analyzed in the recycling factory 34, and the recycled molten metal 44 accompanied with the analyzed data may be delivered to the aluminum rolling mill 14. The trace metals to be analyzed more preferably include Mg, Zn, Ti, and Cr as well as Si, Fe, Cu, and Mn.

Thereafter, the analyzed values obtained from the analysis of the recycled molten metal 44 are compared with a desired aluminum purity and desired trace metal contents of a predetermined planographic printing plate, and the difference therebetween is calculated. Based on the calculated difference, the mix ratio of a fresh metal ingot having a fixed aluminum purity and fixed trace metal contents and a trace metal master alloy having fixed trace metal contents to the recycled molten metal 44 is determined (S5 in Fig.4). That is, the largest possible mix proportion of the recycled molten metal 44 for achieving the desired aluminum purity and the desired trace metal contents of the predetermined planographic printing plate is determined so that the mix proportion of the recycled molten metal 44 is maximized. When the aluminum purity of the fresh metal ingot and the trace metal contents of the trace metal master alloy are not known, analysis similar to that carried out for the recycled molten metal 44 is carried out.

Thereafter, based on the thus determined mix ratio, the recycled molten metal 44 in the molten, state is inputted into the pre-rolling melting furnace, and heated and melted so that the inputted recycled molten metal 44 along with the fresh metal ingot and the trace metal master alloy separately inputted into the pre-rolling melting furnace are mixed. Molten aluminum is thus produced (S6 in Fig.4). The produced molten aluminum undergoes hot rolling and cold rolling, and a roll in which an aluminum plate 88 containing the recycling material 40 is wound into a coil is manufactured (S7 in Fig.4). The manufactured aluminum plate 88 is delivered to the planographic printing plate manufacturing factory 18. A closed-loop recycle flow provided by the recycling method according to the present invention is thus completed. The conditions and other factors in which the hot rolling is performed are the same as those employed to produce the fresh metal ingot described above.

In the method for recycling a planographic printing plate according to the present invention, a 100% fresh metal ingot route 90 in which the aluminum plate 16, which is 100% made of a fresh metal ingot, is delivered from the aluminum rolling mill 14 to the planographic printing plate manufacturing factory 18 is used only for the first time, and a recycle route 92 in which the aluminum plate 88 containing a recycling material is delivered from the aluminum rolling mill 14 to the planographic printing plate manufacturing factory 18 is used from the second time.

The routes 90 and 92 can establish a completely closed recycle flow for reusing aluminum scraps produced in the planographic printing plate industry. As a result, the amount of produced CO₂ can be greatly reduced, as compared to a case where only the fresh metal ingot 12 is used to manufacture a planographic printing plate.

The present invention can therefore not only significantly reduce energy loss and yield loss but also ensure the quality of the aluminum purity and the trace metal contents, whereby the amount of produced CO₂ which contributes to global warming, can be greatly reduced.

As described above, in the method for recycling a planographic printing plate according to the present invention, instead of directly inputting the recycling material 40 into the pre-rolling melting furnace as in related art, the recycling material 40 with deposited substances removed therefrom is melted in the melting furnace 42 (preferably a dedicated melting furnace) into the recycled molten metal 44, and the analyzed result obtained by analyzing the recycled molten metal 44 is used to determine the mix proportions of the recycled molten metal 44, the fresh metal ingot, and the trace metal master alloy to be inputted into the pre-rolling melting furnace.

Further, in the present invention, the produced recycled molten metal 44 in the molten state is inputted into the pre-rolling melting furnace and mixed with the fresh metal ingot and the trace metal master alloy, unlike related art in which the recycling material 40 is converted temporarily into a recycled metal ingot.

In this way, the present invention allows the largest possible mix proportion of the recycled molten metal 44 to be precisely determined, whereby a much less amount of fresh metal ingot, the production of which consumes a large amount of energy, may be used.

Further, in the present invention, since no energy is required to melt a recycled metal ingot and no oxidized substance is produced because no recycled metal ingot is melted, unlike related art, the energy loss and the yield loss can be greatly reduced. It is noted that when the recycling material 40 is converted temporarily into a recycled metal ingot, which is then melted again in the pre-rolling melting furnace as in related art, 1 to 3 mass% of the recycled metal ingot is oxidized, resulting in a yield loss.

Moreover, in the present invention, an aluminum plate whose quality of the aluminum purity is ensured can be manufactured. Specifically, the manufactured aluminum plate has an aluminum purity of 99.0% of higher, which is necessary in electrolytic roughening, which is a preferred aspect of roughening in the present invention. The used planographic printing plates 30 roughened by electrolysis are melted in the melting furnace 42 to prepare the recycled molten metal 44 faster than planographic printing plates roughened by mechanical roughening, whereby the tact time required to produce the recycled molten metal 44 can be shortened. As a result, the yield of the recycled molten metal 44 increases from the same reason as that described in association with the melting temperature, whereby the amount of CO₂ produced when 1 kg of recycled molten metal is manufactured can be reduced.

### EXAMPLES

In these Examples, the following three methods were experimentally compared.

### (Experiment 1)

Used waste planographic printing plates were melted in a melting furnace into molten metal, which was then directly transported to a pre-rolling melting furnace and inputted therein ("Present invention" in Table 1).

### (Experiment 2)

Waste planographic printing plates were converted temporarily into a recycled metal ingot in the melting furnace, transported to the pre-rolling melting furnace, and inputted therein ("Using base metal" shown in Table 1).

### (Experiment 3)

Waste planographic printing plates were directly inputted into the pre-rolling melting furnace in the direct input method, as in Japanese Patent No. 3,420,817 ("Japanese Patent No. 3,420,817" in Table 1).

The regeneration yield, the number of material measurement, and the melting process period were studied for the three experimental methods described above. The number of material measurement used herein is a necessary frequency of measuring the aluminum purity and the trace metal contents of the molten metal in the melting furnace during the melting process in order to manufacture an aluminum plate having a desired aluminum purity and desired trace metal contents.

The melting furnace described above was a direct-heating, Si-free (silicon-free) furnace having a capacity of 20 tons. A pure aluminum cast block was inputted into the Si-free furnace and melted therein, and the inputted pure aluminum was removed from the furnace, which was then washed with hot water once or twice.

Thereafter, used waste planographic printing plates were successively inputted into the Si-free furnace, 10 tons at a time, and a recycled molten metal was prepared. In Experiment 1, the recycled molten metal in the molten state were transported to the pre-rolling melting furnace and inputted therein. In Experiment 2, the recycled molten metal was solidified into a recycled metal ingot, which was transported to the pre-rolling melting furnace and inputted therein. In both cases, the melting temperature ranged from 680 to 900°C, and the temperature in the pre-rolling melting furnace ranged from 680 to 750°C.

In addition to the experiments according to the two methods described above, the experimental results were compared with those in Example-4 shown in the sections from [0017] to [0021] and Table 1 in Japanese Patent No. 3,420,817. In Example-4 in Japanese Patent No. 3,420,817, the mix proportion of waste planographic printing plates was also 100%, but a typical melting furnace was used instead of the Si-free furnace. Further, the melting furnace was not cleaned by using pure aluminum, but waste planographic printing plates were inputted into the melting furnace and melted therein. Thereafter, a gas-based molten metal treatment and a filtering treatment were performed, and the molten metal was cast into a recycled metal ingot.

**[Table 1]**

| | Regeneration yield | Number of material measurement | Melting process period |
|---|---|---|---|
| Present invention | 95% or higher | 3 | 5 hours |
| Using base metal | 95% | 3 | 9 hours |
| Japanese Patent No. 3,420,817 | 85% | 13 | 14 hours |

As seen from the results shown in Table 1, in the present invention, the number of material measurement was fewer than that in the method described in Japanese Patent No. 3,420,817, and the melting process period was greatly shorter than that in the method using a base metal. Further, in the present invention, the regeneration yield was also better than that in the case where a metal ingot was used, although depending on the condition of transportation of the recycled molten metal and other factors.

## Claims

1. A method for manufacturing a support (16, 88) for a planographic printing plate (30), the method **characterized by** comprising:
a preparation step (S1) of preparing used planographic printing plates (36) as a recycling material (40);
a melting step (S2) of melting the recycling material (40) in a melting furnace (42) into a recycled molten metal (44);
an analysis step (S3) of analyzing aluminum purity and trace metal contents of the recycled molten metal;
a transportation step (S4) of removing the recycled molten metal from the melting furnace and transporting the recycled molten metal in the molten state to a pre-rolling melting furnace;
a mix proportion determination step (S5) of comparing the analyzed values obtained in the analysis step with a desired aluminum purity and desired trace metal contents of a predetermined planographic printing plate to calculate the difference between the compared values, and determining mix proportions, based on the calculated difference, of a fresh metal ingot (12) having a fixed aluminum purity and fixed trace metal contents and a trace metal master alloy having fixed trace metal contents;
a component adjustment step (S6) of inputting the recycled molten metal (44) in the molten state into the pre-rolling melting furnace, inputting the fresh metal ingot (12) and the trace metal master alloy into the pre-rolling melting furnace in accordance with the mix proportions determined in the mix proportion determination step, and heating and melting the recycled molten metal, the fresh metal ingot, and the trace metal master alloy into molten aluminum having desired components; and
an aluminum support formation step (S7) of performing a rolling process to form a strip-shaped aluminum plate (28) from the resultant molten aluminum.

2. The method for manufacturing a support (16, 88) for a planographic printing plate (30) according to claim 1,
wherein a thermally insulating container (54) filled with the recycled molten metal (44) is transported in the transportation step.

3. The method for manufacturing a support (16, 88) for a planographic printing plate (30) according to claim 1 or 2,
wherein the melting furnace (42) used in the melting step is a dedicated furnace that is only used to melt the recycling material (40).

4. The method for manufacturing a support (16, 88) for a planographic printing plate (30) according to any one of claims 1 to 3,
further comprising a removal step of removing a plate making layer and an ink from the used planographic printing plates (36) before the preparation step.

5. The method for manufacturing a support (16, 88) for a planographic printing plate (30) according to any one of claims 1 to 4,
wherein the recycling material (40) is melted in the melting step at a temperature ranging from 680 to 900°C.

6. The method for manufacturing a support (16, 88) for a planographic printing plate (30) according to any one of claims 1 to 5,
wherein the aluminum purity of the molten aluminum before the rolling process is 99.0% or higher.

7. The method for manufacturing a support (16, 88) for a planographic printing plate (30) according to any one of claims 1 to 6,
wherein the trace metals contained in the recycled molten metal (44) are analyzed for at least Si, Fe, Cu, and Mn.

8. A method for recycling a planographic printing plate (30), the method **characterized by** comprising:
a planographic printing plate manufacturing step (S11) of manufacturing a planographic printing plate (30) by forming (24) at least a plate making layer on the support (16, 88) for a planographic printing plate manufactured by using the method according to any one of claims 1 to 7;
a printing step (S12) of performing desired printing by using the manufactured planographic printing plate (16, 88);
a recovery step (S13) of recovering the used planographic printing plate (36) left in the printing step; and
a recycle step (S14) of recycling the recovered, used planographic printing plate into a recycling material (40) to be used in the melting step of the method according to any one of claims 1 to 7.

9. The method for recycling a planographic printing plate according to claim 8,
wherein the recycling material (40) includes cut pieces (33) and other leftovers from a planographic printing plate left in the course of the manufacture in the planographic printing plate manufacturing step (S11) as well as the planographic printing plate (36) having been used in printing.
